# EUROPEAN PATENT SPECIFICATION

(11) **EP 1 285 529 B1**
(45) Date of publication and mention of the grant of the patent: **24.11.2004**
(21) Application number: 01931889.8
(22) Date of filing: 21.05.2001
(51) Int. Cl.: H04N 1/407

(54) **CALIBRATING PRINTING MACHINES**
KALIBRIERUNG VON DRUCKMASCHINEN
CALIBRAGE DE MACHINES D'IMPRESSION

(30) Priority: 22.05.2000 GB 0012457
(43) Date of publication of application: 26.02.2003
(73) Proprietor: Priest, Mark, Enfield, Middlesex EN3 6QB (GB)
(72) Inventor: Priest, Mark, Enfield, Middlesex EN3 6QB (GB)
(74) Representative: Meddle, Alan Leonard
(86) International application number: PCT/GB2001/002248
(87) International publication number: WO 2001/091453

(56) References cited:
- EP-A- 0 864 422
- WO-A-99/26407
- US-A- 5 293 539

## Description

This invention relates to improvements in or relating to the calibration of printing machines.

The faithfulness with which a printed image produced by a printing machine reproduces an original image to a pre-determined standard is termed the transfer function of the machine.

Modem computer controlled printing machines print images from printing plates on which a reproduction of an original image to be printed is formed from pixels each of which is composed of an array of dots. The proportion of the area of a pixel covered by dots determines the so-called density of the pixel and varies from 0% to 100%. When the printing plate is inked and applied by the machine to a substrate, such as paper, to form a printed image on the paper, the printed dots exhibit a phenomenon called dot gain which affects the transfer function of the machine. This dot gain effect is caused by spreading of the perimeter or shore line of the ink which forms the dots on the paper and causes an increase in the ink-bearing area of the printed pixel, with the result that the printed pixel has a greater density than that represented by the area of the dots on the corresponding pixel of the printing plate. As is well known, colour images are printed in several steps using different coloured inks to print each component or colour separations. For any given ink, the degree of dot gain, that is the percentage increase in the density of the printed dot over that indicated by the pixel on the printing plate, differs depending upon the indicted density of the pixel being printed, increasing with increasing density from zero to a maximum value at a density in the region of about 50% and decreasing again to zero at a density of 100%.

Printing machines are also able to produce printing plates with different numbers of lines of dots per unit of length transverse to the lines, the number of lines per unit of length being known as the screen ruling. It has been found in tests that dot gain increases as the screen ruling is increased and that, moreover, the maximum value of dot gain occurs at a different value of density.

In order to print a reproduction of an original image, the printing machine scans the original image to measure the density of the pixels of a notional pixel array into which the original image is divided for the purposes of reproduction. The dot gain effect has, however, to be taken into account when printing a reproduction from the scanned density values. This is achieved by correcting the scanned values in accordance with a set or profile of dot gain values set on the machine in accordance with information supplied by the manufacturer, a standard dot gain profile being used for any particular model of machine supplied by a manufacturer on the assumption that all machines of that model exhibit the same transfer function.

In practice, individual printing machines of the same model have different transfer functions even when new, that is to say the printed result achieved with the standard set of dot gain values differs from machine to machine and this variance becomes more pronounced as a machine ages.

Conventionally, in order to produce a faithful or optimised reproduction of an original image, a calibration procedure is therefore first carried out on the printing machine. This involves using the machine to reproduce a standard test strip, known as a step wedge, which carries a sequence of coloured patches or targets of the ink which is to be used for an ensuing print job, the ink patches being of graded density, varying from 0 to 100% in 5% increments. The density of each of the ink patches on the resulting printed strip produced by the printing machine is then measured using an instrument known as a densitometer which is effectively a reflection photometer arranged to provide an optical measurement of the density of each patch on the printed strip. The deviations of the measured density values from the corresponding values of the standard dot gain profile stored on the machine are then determined and used to set the density values to be used for the print job in question. Often this calibration procedure has to be carried out several times before a satisfactory result is achieved.

It is an object of the present invention to provide an accurate and reliable method of calibrating a computer controlled printing machine and a calibration tool for use in performing the method of the invention.

Accordingly, in one aspect, the invention provides a method of calibration a computer controlled printing machine to produce printed copies of an original image to a pre-determined standard, comprising: using the printing machine to print a reproduction of a step wedge, having patches with densities concentrated in a central region of the density range, with the machine set to dot gain values corresponding to predetermined density values on a standard dot gain profile; measuring the density values of the patches of the printed reproduction of the step wedge; determining from the measured density values the position of the density exhibiting maximum measured dot gain; formulating a revised dot gain profile having the same shape as the standard dot gain profile but with a maximum dot gain which is equal to the maximum measured dot gain and which is located at the density having the maximum measured dot gain; determining revised dot gain values for the predetermined density values from the revised dot gain profile; and setting the dot gain values in the printing machine in accordance with the revised dot gain values.

Preferably, the method comprises using a step wedge having ten patches at least some of which form a series of patches having density values covering the central region of the density range in steps.

In an embodiment of the invention, one of the patches has a density of 100% and the remaining nine patches have densities ranging from 42% to 58% in 2% steps.

Desirably, the step wedge is placed on a portion of the print job in an area outside the image area and the machine is used to produce a reproduction of the image plus step wedge.

Advantageously, the method of the present invention further comprises the steps of: using the printing machine to print a reproduction of a fine tuning step wedge, having patches with ranges of density values concentrated at the end regions of the density range, with the revised dot gain values determined from the measurements on the main step wedge; visually checking the patches printed by the machine for defects; and adjusting the dot gain values of the revised profile at an end region of the density range if a printed patch corresponding to that end region exhibits a defect.

Preferably, the method comprises using a fine tuning wedge having nine patches at least some of which have densities covering the two end regions of the density range in steps.

In one embodiment of the invention, one of the patches of the fine tuning wedge has a density of 50%, the patches of a first group of the remaining patches have densities ranging from 1% to 7% in 2% steps and the patches of a second group have densities ranging from 93 to 99% in 2% steps.

In another aspect, the invention provides a computer program adapted to perform the steps of the method according to the invention when loaded into a computer controlled printing machine.

In a further aspect, the invention provides a computer program in accordance with the invention embodied on a computer-readable medium.

In order that the invention may be more readily understood, an embodiment thereof will now be described in more detail, by way of example, with reference to the accompanying drawings, in which:
Figure 1 is a very simplified block diagram illustrating the components of a computer-controlled printing machine;
Figure 2 and 3 are graphs of dot gain versus density illustrating dot gain profiles measured for two different colours at different densities using a known calibration method;
Figure 4 is a graph showing dot gain profiles measured for different colours at different screen rulings, the results for each colour at different screen rulings being averaged to produce the illustrated average curves for each colour;
Figure 5 is a graph showing in solid line a dot gain profile obtained by taking an overall average of the dot gain profiles for different colours shown in Figure 4 and in broken line the standard dot gain profile supplied with the printing machine; and
Figure 6 is a schematic flow chart illustrating a calibration method embodying the present invention.

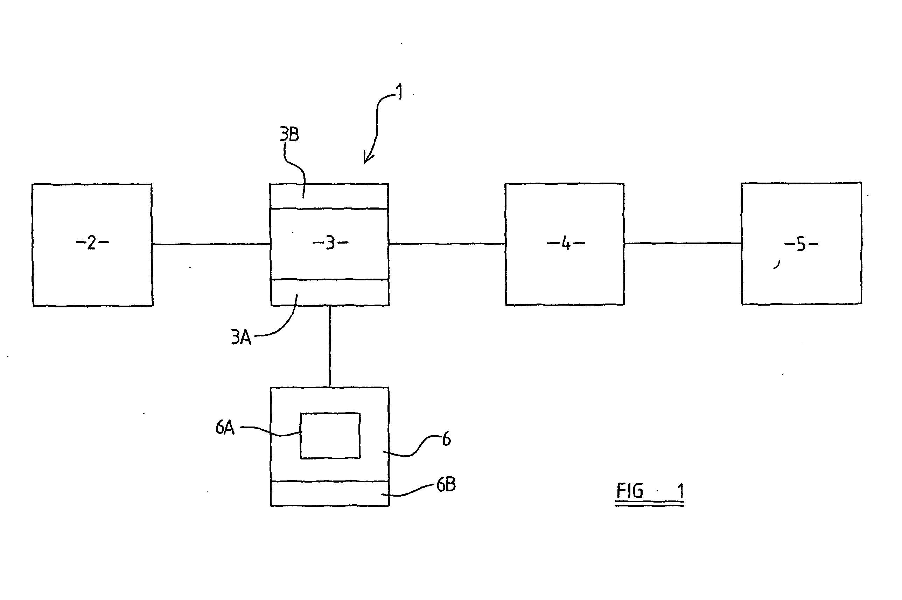

Referring firstly to Figure 1, a computer controlled printing machine 1 comprises an input scanner 2 for scanning an original image to be reproduced by the machine 1 and delivering a digital file representing the image as the values of the attributes, such as the colour and density, of a sequence of individual pixels in a raster of pixels into which the image is notionally analysed by the scanner 2. The digital file is passed to an image processing computer 3 of the machine 1 which, *inter alia,* serves to adjust the digital representation of the image in view of the transfer characteristics of the machine 1. The resulting processed digital image data is then used to control the production in a plate production stage 4 of a printing plate which is inked and applied to a substrate, such as paper, in a press 5 to produce a printed reproduction of the original image.

The computer 3 has print control software 3B and a memory 3A. An input/output device 6 with a display screen 6A and a keyboard 6B forms an interface with the computer to enable data to be input to and displayed by the computer 3.

The printing plate produced in the plate production stage 4 has an array of raised dots representing each pixel of the image to be reproduced. The proportion of the area of a pixel covered by dots on the plate determines the density of the corresponding area of colour on an image printed from the plate and varies from 0% to 100%.

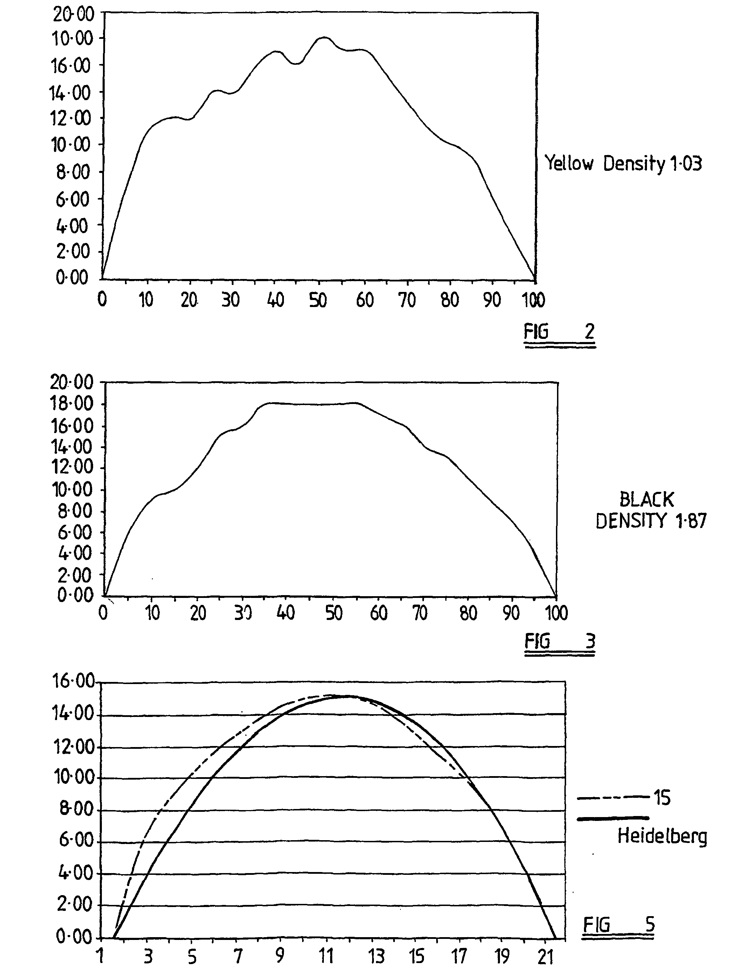

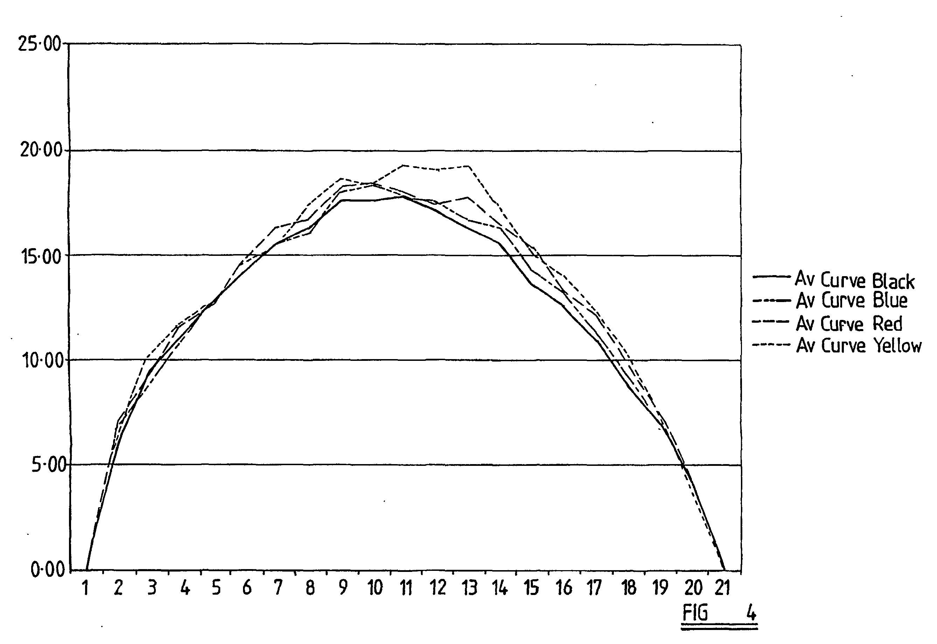

When the printing plate is inked and applied to the substrate in the press 5, the printed dots exhibit an effect called dot gain, whereby the shore line of the printed dots of ink spreads and thus increases the ink-bearing area of the pixels. For any given ink, the dot gain varies with the density of the pixel to be printed in accordance with a dot gain profile which rises progressively, but nonlinearly, with increasing density from zero up to a maximum value near the middle of the density range and then progressively decreases again in a nonlinear manner to zero as the density increases to a maximum. The dot gain profile also depends upon the particular ink being printed. This dot gain affects the transfer function of the printing machine and thus has to be taken into account when processing the digital representation of the image in the image processing computer 3 of the machine 1. To this end, the memory 3A of the computer 3 stores standard dot gain calibration data in the form of a set of dot gain values each corresponding to a predetermined density value on a standard dot gain profile, which calibration data is intended to be applied to the digital image data from the scanner 2 to adjust the image data in the light of the anticipated dot gain profile in order to produce a printed image which is a faithful reproduction of the original image. Such a standard dot gain profile is shown as curve 7 in Figure 5.

Unfortunately, the dot gain profile of new machines of the same model varies from machine to machine, and also varies with the age of the machine. Consequently, the standard dot gain calibration data alone is incapable of providing prints of the required standard. As a result, it is conventional to carry out an additional calibration procedure prior to printing in an attempt to adjust the calibration data to suit the actual dot gain profile of the particular machine 1. This calibration procedure involves printing an image of a standard step wedge having a sequence of colour patches of different standard densities, measuring the density of the resulting printed patches using a densitometer in the form of a reflection photometer, determining the difference between the measured density data and the standard density data of the step wedge and using this difference to adjust the dot gain calibration data in the image processing computer.

The known additional calibration procedure lacks consistency and accuracy and, as a result, the additional calibration procedure often has to be repeated several times using the newly adjusted calibration data each time before an acceptable result can be achieved.

Extensive research by the Applicant has revealed that one factor responsible for the lack of accuracy in the additional calibration procedure is the inherent inaccuracy of the densitometer, particularly as used to measure densities at the extreme ends of the density range corresponding to highlights and shadows. This instrument inaccuracy arises from the +/- 1% accuracy of the actual measurement and the approximation inherent in the equation used to convert density into dot area. Tests carried out using yellow ink of weight 1.03 and black ink of 1.87 (representing light and heavy inks respectively) and the known additional calibration procedure gave the results depicted in Figures 2 and 3. These Figures show that, when plotted as a graph, each of the two sets of measured dot gain values formed an irregular profile 8 (Figure2) and 9 (Figure 3).

Another factor that affects the accuracy of the known additional calibration procedure has been shown to be the fact that the dot gain profile increases overall with the screen ruling value with the value of the density at which the maximum dot gain occurs also moving as the screen ruling value is changed. Thus tests carried out by the Applicant have shown that the maximum dot gain occurs at a density of 50% for a screen ruling value of 175 but occurs at closer to 60% for a screen ruling value of 250. The test results indicate that the main contributing factor to this change in the shape of the dot gain profile is the frequency of the dots, which has an effect on the overall shore line or perimeter of the dots within the measured area. Tests using films of the 175 and 250 screen samples enlarged times 4 to print on large format machines (at screen ruling values of approximately 43 and 62 respectively) were found to print with the same characteristics, the maximum dot gain for the 43 screen ruling value being at 50% density and the maximum dot gain for the 62 screen ruling value being closer to 60%.

Tests were also carried out to determine whether dot gain varies with the weight of the ink being used. By way of example, the test results using magenta ink of different weights are tabulated below for the dot at 50% density and are typical of the results obtained using inks of different colours and from different manufacturers.

| Ink Weight | Dot Gain @ 50% | Difference | Effect |
|---|---|---|---|
| 1.2 | 12% | start point | too light |
| 1.3 | 14% | +2% | |
| 1.4 | 14% | +0% | |
| 1.5 | 14% | +0% | optimum |
| 1.6 | 15% | +0% | |
| 1.7 | 16% | +1% | |
| 1.8 | 18% | +2% | too dark |

From these tests it was found that increases in dot gain with increasing ink weight were substantially consistent within the printable band of ink weights regardless of the colour or manufacturer.

Further tests were carried out to investigate whether or not inks of different colour exhibit a dot gain profile of the same shape. Measurements were taken from the same test sheet printed using different ink weights on an SM74 press, the measuring instrument being a Gretag densitometer. The results for each colour were first averaged to obtain a set of four averaged individual colour profiles 10 as shown in Figure 4. The resulting individual colour profiles were then all averaged together to form a resultant average profile for all colours shown, after smoothing, as solid line 11 in Figure 5 which also shows, in broken line, the single standard dot gain profile 7 supplied by the manufacturer. These results suggest that all colours of ink print with basically the same shape of dot gain profile but with a maximum dot gain at a density value which does not coincide with the value indicated by the standard profile.

In order to overcome the inherent inaccuracy of the known calibration procedure as described above, a calibration method embodying the present invention employs a pair of calibration step wedges for carrying out respective main calibration and fine tuning procedures. Exemplary main and fine tuning step wedges each comprise a series of ten colour patches of different density for each colour with each patch being in the form of a circle having a diameter of from 3.5 to 4mm. The patches of the main step wedge are concentrated in the middle of the density range, where the measurement accuracy of a densitometer is at its maximum, and the patches of the fine tuning step wedge are concentrated at the extremities of the density range. An example of suitable patch densities for each of the two step wedges is given below:

| Main Step Wedge | Fine Tuning Step Wedge |
|---|---|
| 100% | 99% |
| 42% | 97% |
| 44% | 95% |
| 46% | 93% |
| 48% | |
| 50% | 50% |
| 52% | 7% |
| 54% | 5% |
| 56% | 3% |
| 58% | 1% |

The above density values for the step wedges are given merely by way of example and other values could also be used. For example, the main step wedge could have one patch with a density of 100% and the remaining nine patches with densities ranging from 30% to 70% in 5% steps.

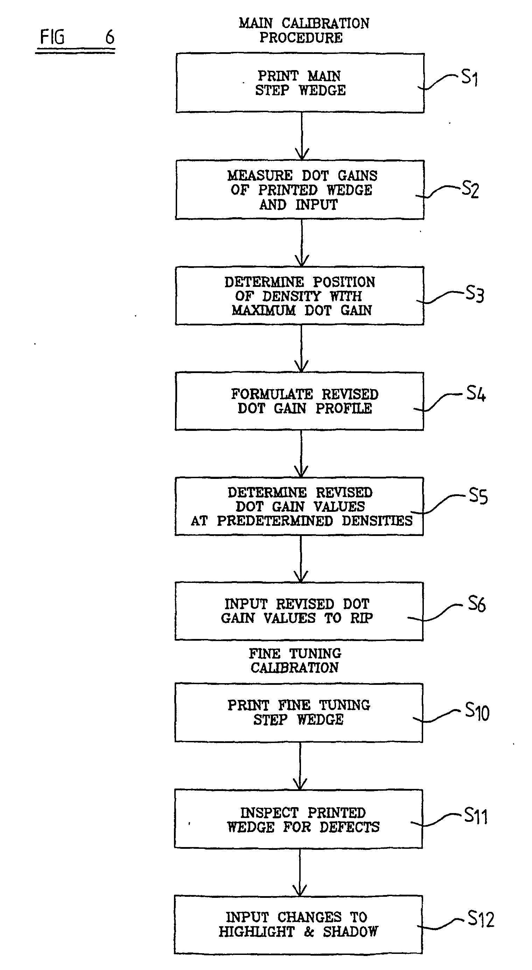

Referring now to Figure 6, in carrying out a calibration method embodying the present invention, a first step S1 of a main calibration procedure is to place the main step wedge in the gutter of the real print job carrying the original image to be reproduced. The gutter is a region between lines of cut made to separate the desired image from the printed job. The job is then printed using conventional ink weights and with the standard dot gain settings. In a second step S2, the dot gain values of the printed copy of the main step wedge are measured and the values entered into the image processing computer 3. The print control software 3A of the computer includes calibration software which is adapted in step S3 to determine from the measured values the position of the density exhibiting the maximum measured dot gain, in step S4 to formulate a revised dot gain profile having the same shape as the standard dot gain profile but with a maximum dot gain which is equal to the maximum measured dot gain and which is located at the density having the maximum measured dot gain, in step S5 to determine revised dot gain values for the predetermined density values from the revised dot gain profile and in step S6 to write the revised dot gain values to a RIP ( Raster Image Processor) of the printing machine which then controls the production of a printing plate in accordance with the revised dot gain values in place of the dot gain values of the standard dot gain profile.

The dot gain settings obtained from the main calibration procedure may be refined by means of a fine tuning calibration in which: in step S10 the fine tuning step wedge is placed in the gutter of the print job and the job is printed with the main calibration settings. In step S11 the printed job is then visually inspected for broken dot on highlight and filling in on shadow. If defects are detected, changes can be manually entered into the computer 3 in step S 12 via the calibration software to adjust the dot gain settings for either or both of the highlight region (density value of 1% at the lower end of the density range) and shadow region (density value of 99% at the upper end of the density range) in increments of 0.1% until the desired print standard is achieved. This change in the extreme dot settings is reflected throughout the range but with decreasing effect towards the middle of the density range.

A calibration method embodying the invention is able to provide data correction for a number of printing applications and is able to be used with a wide range of equipment. The method enables consistent printing results to be obtained regardless of the age or manufacturer of the printing machine and can match the printed results of CTP to film. Moreover; the method enables higher screen rulings to be printed with ease. Since the method does not require test plates, being set up via a step wedge placed in the gutter of a real print job, it is user friendly and enables easier matching of proofs.

In the present specification "comprise" means "includes or consists of" and "comprising" means "including or consisting of'.

## Claims

1. A method of calibrating a computer-controlled printing machine to produce printed copies of an original image to a pre-determined standard, comprising: using the printing machine to print a reproduction of a step wedge, having patches with densities concentrated in a central region of the density range, with the machine set to dot gain values corresponding to pre-determined density values on a standard dot gain profile; formulating a revised dot gain profile having the same shape as the standard dot gain profile but with a maximum dot gain which is equal to the maximum measured dot gain and which is located at the density having the maximum measured dot gain; determining revised dot gain values for the predetermined density values from the revised dot gain profile; and setting the dot gain values in the printing machine in accordance with the revised dot gain values.

2. A method according to Claim 1, comprising using a step wedge having ten patches at least some of which form a series of patches having density values covering the central region of the density range in steps.

3. A method according to Claim 2 comprising using a step wedge in which one of the patches has a density of 100% and the remaining nine patches have densities ranging from 42% to 58% in 2% steps.

4. A method according to Claim 2 comprising using a step wedge in which one of the patches has a density of 100% and the remaining nine patches have densities ranging from 30% to 70% in 5% steps.

5. A method according to any preceding Claim, comprising placing the step wedge on a portion of the print job in an area outside the image area and using the machine to produce a reproduction of the image plus step wedge.

6. A method according to any preceding Claim, further comprising the steps of: using the printing machine to print a reproduction of a fine tuning step wedge, having patches with ranges of density values concentrated at the end regions of the density range, with the revised dot gain values determined from the measurements on the main step wedge; visually checking the patches printed by the machine for defects; and adjusting the dot gain values of the revised dot gain profile at an end region of the density range if a printed patch corresponding to that end region exhibits a defect.

7. A method according to Claim 6, comprising using a fine tuning wedge having nine patches at least some of which have densities covering the two end regions of the density range in steps.

8. A method according to Claim 7, comprising using a fine tuning wedge in which one of the patches has a density of 50%, the patches of a first group of the remaining patches have densities ranging from 1% to 7% in 2% steps and the patches of a second group have densities ranging from 93% to 99% in 2% steps.

9. A computer program adapted to perform the steps of the method according to any preceding Claim when loaded into a computer-controlled printing machine.

10. A computer program according to claim 9 embodied on a computer-readable medium.

## Patentansprüche

1. Verfahren zur Kalibrierung einer computergesteuerten Druckmaschine zur Erzeugung von gedruckten Kopien eines Originalbildes auf einen vorab festgelegten Standard, umfassend: Verwendung der Druckmaschine zum Drucken einer Wiedergabe eines Stufenkeils, der Flecken mit den Dichten aufweist, die in einem zentralen Gebiet des Dichtebereiches konzentriert sind, wobei die Maschine auf Tonwertzunahmewerte eingestellt ist, die vorab festgelegten Dichtewerten auf einem Standard-Tonwertzunahmeprofil entsprechen; Entwerfen eines überarbeiteten Tonwertzunahmeprofils mit demselben Verlauf wie das Standard-Tonwertzunahmeprofil, aber mit einer maximalen Tonwertzunahme, die der maximalen gemessenen Tonwertzunahme entspricht und sich bei der Dichte mit der maximalen gemessenen Tonwertzunahme befindet; Festlegung von überarbeiteten Tonwertzunahmewerten für die vorab festgelegten Dichtewerte anhand des überarbeiteten Tonwertzunahmeprofils; und Einstellen der Tonwertzunahmewerte in der Druckmaschine gemäß den überarbeiteten Tonwertzunahmewerten.

2. Verfahren nach Anspruch 1, umfassend die Verwendung eines Stufenkeils mit zehn Flecken, wobei zumindest einige davon eine Reihe von Flecken mit Dichtewerten bilden, die das zentrale Gebiet des Dichtebereiches in Stufen abdecken.

3. Verfahren nach Anspruch 2, umfassend die Verwendung eines Stufenkeils, in dem einer der Flecken eine Dichte von 100% und die restlichen neun Flecken Dichten im Bereich von 42% bis 58% in 2%-Stufen aufweisen.

4. Verfahren nach Anspruch 2, umfassend die Verwendung eines Stufenkeils, in dem einer der Flecken eine Dichte von 100% und die restlichen neun Flecken Dichten im Bereich von 30% bis 70% in 5%-Stufen aufweisen.

5. Verfahren nach einem vorangehenden Anspruch, umfassend Plazieren des Stufenkeils an einem Teil des Druckjobs in einem Bereich außerhalb des Bildbereichs und Verwendung der Maschine zur Erzeugung einer Wiedergabe des Bildes plus Stufenkeil.

6. Verfahren nach einem vorangehenden Anspruch, ferner umfassend die Schritte: Verwendung der Druckmaschine zum Drucken einer Wiedergabe eines Feinabstimmstufenkeils, der Flecken mit Bereichen von Dichtewerten aufweist, die an den Endgebieten des Dichtebereiches konzentriert sind, wobei die überarbeiteten Tonwertzunahmewerte anhand der Messungen am Hauptstufenkeil festgelegt sind; optisches Überprüfen der von der Maschine gedruckten Flecken hinsichtlich Defekte; und Einstellen der Tonwertzunahmewerte des überarbeiteten Tonwertzunahmeprofils an einem Endgebiet des Dichtebereiches, wenn ein gedruckter Fleck, der dem Endgebiet entspricht, einen Defekt aufweist.

7. Verfahren nach Anspruch 6, umfassend Verwendung eines Feinabstimmkeils mit neun Flecken, von den mindestens einige Dichten aufweisen, die die zwei Endgebiete des Dichtebereiches in Stufen abdecken.

8. Verfahren nach Anspruch 7, umfassend Verwendung eines Feinabstimmkeils, in dem einer der Flecken eine Dichte von 50% aufweist, die Flecken einer ersten Gruppe der restlichen Flecken Dichten aufweisen, die im Bereich von 1% bis 7% in 2%-Stufen aufweisen, und die Flecken einer zweiten Gruppe Dichten im Bereich 93% bis 99% in 2%-Stufen aufweisen.

9. Computerprogramm, das zur Durchführung der Schritte des Verfahrens gemäß einem vorangehenden Anspruch geeignet ist, wenn es in eine computergesteuerte Druckmaschine geladen wird.

10. Computerprogramm nach Anspruch 9, das auf einem computerlesbarem Medium gespeichert ist.

## Revendications

1. Procédé pour calibrer une machine d'impression commandée par ordinateur pour produire des copies imprimées d'une image d'origine selon un standard prédéterminé, consistant à : vtiliser la machine d'impression pour imprimer une reproduction d'un nuancier, ayant des taches avec des densités concentrées dans une région centrale de la gamme de densités, avec la machine réglée pour effectuer un élargissement du point de valeurs correspondant à des valeurs de densité prédéterminées sur un profil d'élargissement de point standard ; formuler un profil d'élargissement de point révisé ayant la même forme que le profil d'élargissement de point standard mais avec un élargissement de point maximum qui est égal à l'élargissement de point mesuré maximum et qui est situé au niveau de la densité ayant l'élargissement de point mesuré maximum ; déterminer des valeurs d'élargissement de point révisées pour les valeurs de densité pré-déterminées à partir du profil d'élargissement de point révisé ; et régler les valeurs d'élargissement de point dans la machine d'impression selon les valeurs d'élargissement de point révisées.

2. Procédé selon la revendication 1, consistant à utiliser un nuancier ayant dix taches dont au moins certaines forment une série de taches ayant des valeurs de densité couvrant la région centrale de la gamme des densités selon des échelons.

3. Procédé selon la revendication 2, consistant à utiliser un nuancier dans lequel l'une des taches a une densité de 100% et les neuf taches restantes ont des densités s'étendant de 42% à 58% selon des échelons de 2%.

4. Procédé selon la revendication 2, consistant à utiliser un nuancier dans lequel l'une des taches a une densité de 100% et les neuf taches restantes ont des densités s'étendant de 30% à 70% selon des échelons de 5%.

5. Procédé selon une quelconque revendication précédente, consistant à placer le nuancier sur une partie du travail d'impression dans une zone à l'extérieur de la zone de l'image et à utiliser la machine pour produire une reproduction de l'image plus du nuancier.

6. Procédé selon une quelconque revendication précédente, comprenant de plus les étapes de : utiliser la machine d'impression pour imprimer une reproduction d'un nuancier à réglage précis, ayant des taches avec des gammes de valeurs de densité concentrées au niveau des régions d'extrémité de la gamme des densités, avec les valeurs d'élargissement de point révisées déterminées à partir des mesures sur le nuancier principal ; vérifier visuellement les taches imprimées par la machine pour défauts ; et régler les valeurs d'élargissement de point du profil d'élargissement de point révisé à une région d'extrémité de la gamme des densités si une tache imprimée correspondant à cette région d'extrémité montre un défaut.

7. Procédé selon la revendication 6, consistant à utiliser un nuancier à réglage précis ayant neuf taches dont au moins certaines ont des densités couvrant les deux régions d'extrémité de la gamme des densités selon des échelons.

8. Procédé selon la revendication 7, consistant à utiliser un nuancier à réglage précis dans lequel l'une des taches à une densité de 50%, les taches d'un premier groupe des taches restantes ont des densités s'étendant de 1% à 7% selon des échelons de 2% et les taches d'un second groupe ont des densités s'étendant de 93% à 99% selon des échelons de 2%.

9. Programme d'ordinateur adapté à réaliser les étapes du procédé selon une quelconque revendication précédente quand il est chargé dans une machine d'impression commandée par ordinateur.

10. Programme d'ordinateur selon la revendication 9 incorporé sur un support lu sur ordinateur.
